# EUROPEAN PATENT APPLICATION

(11) **EP 3 952 504 A1**
(43) Date of publication of application: **09.02.2022**
(21) Application number: 19921434.7
(22) Date of filing: 28.03.2019
(51) Int. Cl.: H04W 72/04, H04W 28/06

(54) **USER DEVICE AND BASE STATION DEVICE**

(71) Applicant: NTT DOCOMO, INC., Chiyoda-Ku Tokyo 100-6150 (JP)
(72) Inventor: TAKEDA, Daiki, Tokyo 100-6150 (JP); TAKEDA, Kazuaki, Tokyo 100-6150 (JP); HARADA, Hiroki, Tokyo 100-6150 (JP); ISOGAWA, Takayuki, Tokyo 100-6150 (JP)
(74) Representative: Hoffmann Eitle
(86) International application number: PCT/JP2019/013909
(87) International publication number: WO 2020/194760

(57) **Abstract**

A user equipment includes a receiving unit that receives, from a base station apparatus, a resource configuration used for uplink and downlink in time division duplex and information indicating an allocation pattern of a resource used for uplink and downlink in time division duplex in a radio access technology that differs from a radio access technology of the user equipment; a control unit that determines, based on the resource configuration and the information indicating the allocation pattern, a resource used for the uplink and the downlink in the time division duplex used by the user equipment; and a communication unit that performs communication with the base station apparatus on the determined resource used for the uplink and the downlink in the time division duplex.

## Description

### TECHNICAL FIELD

The present invention relates to a user equipment and a base station apparatus in a radio communication system.

### BACKGROUND ART

In New Radio (NR) (which is also referred to as "5G") that is a successor system to Long Term Evolution (LTE), technology has been studied (e.g., Non-Patent Document 1) that meets the requirements, such as a requirement on a large capacity system, a requirement on a high data transmission rate, a requirement on low latency, a requirement on simultaneous connection of multiple terminals, a requirement on low cost, and a requirement on power saving.

Compared to LTE in which a TDD configuration can be semi-statically configured, an NR radio communication system allows a more flexible configuration. For example, in an NR TDD configuration, a Downlink (DL) resource or an Uplink (UL) resource can be scheduled in units of symbols (e.g., Non-Patent Document 2).

### Related Art Document

### [Non-Patent Document]

Non-Patent Document 1: 3GPP TS 38.300 V15.4.0 (2018-12)
Non-Patent Document 2: 3GPP TS 38.213 V15.4.0 (2018-12)

### SUMMARY OF THE INVENTION

### [PROBLEM TO BE SOLVED BY THE INVENTION]

The NR radio communication system is introduced, and a TDD configuration similar to that of LTE is supported for enhanced Machine Type Communication (eMTC) or Narrow Band Internet of Things (NB-IoT). As a normal user equipment that supports NR can use a more flexible TDD configuration than an LTE user equipment, interference may occur depending on a TDD configuration when the normal user equipment that supports NR communicates in a frequency band close to a frequency band used for eMTC or NB-IoT.

The present invention has been accomplished in view of the above-described point, and an object is to perform appropriate scheduling for each radio communication of radio communications to which different time division duplex configurations are applied.

### [MEANS FOR SOLVING THE PROBLEM]

According to the disclosed technology, there is provided a user equipment including a receiving unit that receives, from a base station apparatus, a resource configuration used for uplink and downlink in time division duplex and information indicating an allocation pattern of a resource used for uplink and downlink in time division duplex in a radio access technology that differs from a radio access technology of the user equipment; a control unit that determines, based on the resource configuration and the information indicating the allocation pattern, a resource used for the uplink and the downlink in the time division duplex used by the user equipment; and a communication unit that performs communication with the base station apparatus on the determined resource used for the uplink and the downlink in the time division duplex.

### [ADVANTAGE OF THE INVENTION]

According to the disclosed technology, appropriate scheduling can be performed for each radio communication of radio communications to which different time division duplex configurations are applied.

### BRIEF DESCRIPTION OF DRAWINGS

Fig. 1 is a diagram illustrating a radio communication system according to an embodiment of the present invention.
FIG. 2 is a diagram illustrating an example (1) of a TDD UL/DL configuration.
FIG. 3 is a diagram for illustrating an example of a radio frame configuration by semi-static signaling.
FIG. 4 is a diagram for illustrating an example of a radio frame configuration by dynamic signaling.
FIG. 5 is a diagram illustrating an example (2) of a TDD UL/DL configuration.
FIG. 6 is a diagram illustrating an example of an allocation of an eMTC carrier or an NB-IoT carrier.
FIG. 7 is a diagram illustrating an example (1) of a TDD UL/DL allocation pattern.
FIG. 8 is a diagram illustrating an example (2) of a TDD UL/DL allocation pattern.
FIG. 9 is a diagram illustrating an example (3) of a TDD UL/DL allocation pattern.
FIG. 10 is a diagram illustrating an example (4) of a TDD UL/DL allocation pattern.
FIG. 11 is a diagram illustrating an example (1) of a TDD UL/DL allocation pattern according to an embodiment of the present invention.
FIG. 12 is a diagram illustrating an example (2) of a TDD UL/DL allocation pattern according to an embodiment of the present invention.
FIG. 13 is a diagram illustrating an example (3) of a TDD UL/DL allocation pattern according to an embodiment of the present invention.
FIG. 14 is a diagram illustrating an example (4) of a TDD UL/DL allocation pattern according to an embodiment of the present invention.
FIG. 15 is a diagram illustrating an example (5) of a TDD UL/DL allocation pattern according to an embodiment of the present invention.
FIG. 16 is a diagram illustrating an example (6) of a TDD UL/DL allocation pattern according to an embodiment of the present invention.
FIG. 17 is a sequence diagram illustrating an operation related to a UL/DL resource allocation according to an embodiment of the present invention.
Fig. 18 is a diagram illustrating an example of a functional configuration of a base station apparatus 10 according to an embodiment of the present invention.
Fig. 19 is a diagram illustrating an example of a functional configuration of the user equipment 20 according to an embodiment of the present invention.

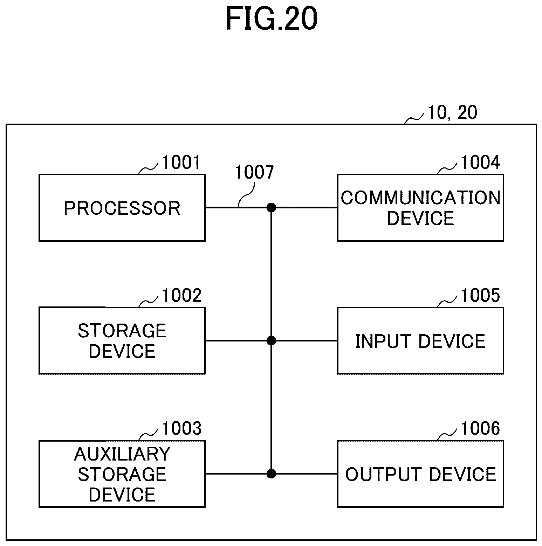

FIG. 20 is a diagram illustrating an example of a hardware configuration of the base station apparatus 10 or the user equipment 20 in an embodiment of the present invention.

### [EMBODIMENTS OF THE INVENTION]

The following embodiments of the present invention are described with reference to the drawings. Note that the embodiments described below are an example, and embodiments to which the present invention is applied are not limited to the following embodiments.

In an operation of a radio communication system of an embodiment of the present invention, existing technology is used as appropriate. Here, the existing technology is, for example, existing LTE but is not limited to the existing LTE. Furthermore, the term "LTE" used in this specification has a broad meaning including LTE-Advanced and a system subsequent to LTE-Advanced (for example, NR), unless as otherwise specified.

In the embodiments of the present invention described below, terms used in the existing LTE are used, such as SS (Synchronization signal), PSS (Primary SS), SSS (Secondary SS), PBCH (Physical broadcast channel), PRACH (Physical random access channel), and the like. This is for convenience of description, and signals, functions, and the like, similar to these may be referred to by other names. The above-described terms in NR correspond to NR-SS, NR-PSS, NR-SSS, NR-PBCH, NR-PRACH, and the like. However, even if a signal is used for NR, the signal is not always specified as "NR-."

In the embodiments of the present invention, a duplex method may be a Time Division Duplex (TDD) method, a Frequency Division Duplex (FDD) method, or any other method (e.g., Flexible Duplex or the like).

In the embodiments of the present invention, "configuring" a radio parameter, or the like, may be "pre-configuring" a predetermined value, or configuring a radio parameter transmitted from a base station apparatus 10 or a user equipment 20.

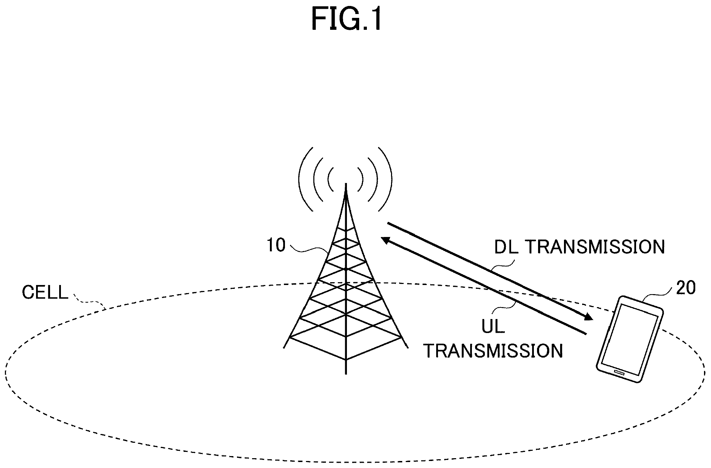

Fig. 1 is a diagram for illustrating a radio communication system according to an embodiment of the present invention. As illustrated in FIG. 1, the radio communication system according to the embodiment of the present invention includes the base station apparatus 10 and the user equipment 20. In FIG. 1, one base station apparatus 10 and one user equipment 20 are illustrated. However, this is an example, and there may be a plurality of base station apparatuses 10 and a plurality of units of user equipment 20.

The base station apparatus 10 provides one or more cells, and the base station apparatus 10 is a communication device for performing radio communication with the user equipment 20. A physical resource of a radio signal may be defined in a time domain and a frequency domain, the time domain may be defined in terms of a number of OFDM symbols, and the frequency domain may be defined in terms of a number of subcarriers or a number of resource blocks. The base station apparatus 10 transmits a synchronization signal and system information to the user equipment 20. The synchronization signal is, for example, NR-PSS and NR-SSS. The system information is transmitted, for example, on a NR-PBCH, and the system information is also referred to as broadcast information. As illustrated in Fig. 1, the base station apparatus 10 transmits a control signal or data to the user equipment 20 on DL (Downlink), and the base station apparatus 10 receives a control signal or data from the user equipment 20 on UL (Uplink). Each of the base station apparatus 10 and the user equipment 20 may be able to transmit and receive signals by performing beamforming. Furthermore, each of the base station apparatus 10 and the user equipment 20 may be configured to apply communication based on Multiple Input Multiple Output (MIMO) to DL or UL. Furthermore, each of the base station apparatus 10 and the user equipment 20 may perform communication through a Secondary Cell (SCell) and a Primary Cell (PCell) during Carrier Aggregation (CA).

The user equipment 20 is a communication device provided with a radio communication function, such as a smartphone, a cellular phone, a tablet, a wearable terminal, or a communication module for Machine-to-Machine (M2M). As illustrated in FIG. 1, the user equipment 20 utilizes various communication services provided by a radio communication system by receiving control signals or data in DL from the base station apparatus 10 and transmitting control signals or data in UL to the base station apparatus 10.

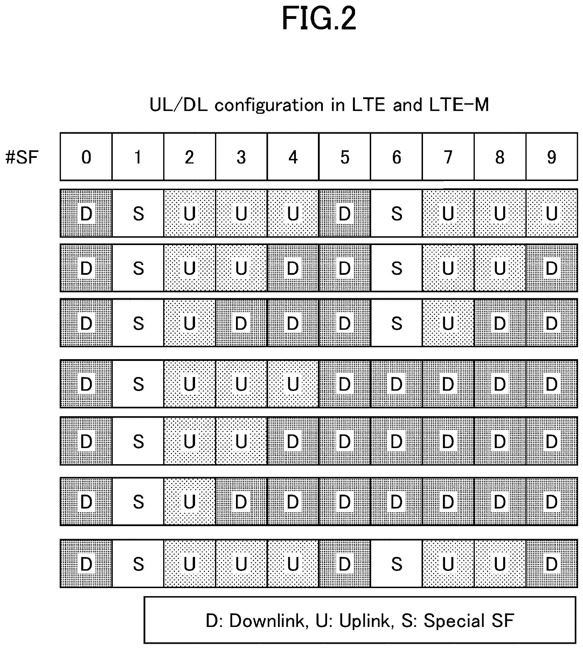

FIG. 2 is a diagram for illustrating an example (1) of a TDD UL/DL configuration. The TDD UL/DL configuration in LTE has a period of ten subframes as illustrated in FIG. 2, and defines DL, UL, or a special subframe in units of subframes. The special subframe is a subframe that includes a DL symbol, a guard period (GP) symbol, and a UL symbol. A resource according to the LTE TDD UL/DL configuration is semi-statically configured. The user equipment 20 supporting enhanced Machine Type Communication (eMTC) or Narrow Band Internet of Things (NB-IoT) supports the LTE TDD UL/DL configuration illustrated in FIG. 2.

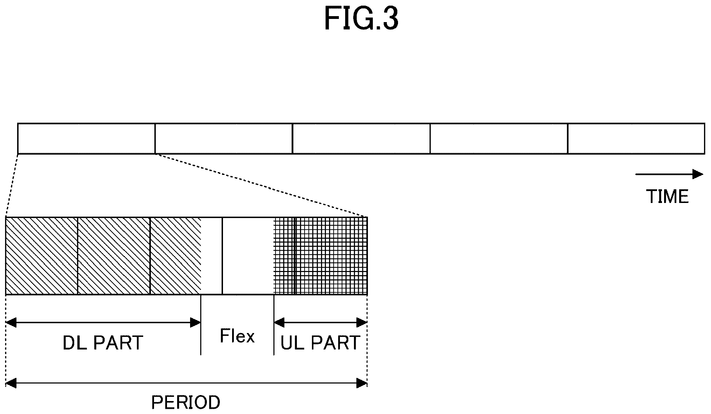

FIG. 3 is a diagram for illustrating an example of a radio frame configuration by semi-static signaling. The TDD configuration with an NR radio frame configuration illustrated in FIG. 3 is signaled to the user equipment 20, for example, by semi-static signaling via Radio Resource Control (RRC). The "Flex" illustrated in FIG. 3 indicates a resource that can be used as DL or UL. One or two DL-Flex-UL patterns for a predetermined time period can be configured as a cell-specific TDD configuration, and either of the DL-Flex-UL patterns can be configured for each slot as a UE-specific TDD configuration. The period of the TDD configuration is 0.5 ms, 0.625 ms, 1 ms, 1.25 ms, 2 ms, 2.5 ms, 3 ms, 4 ms, 5 ms, or 10 ms, for example.

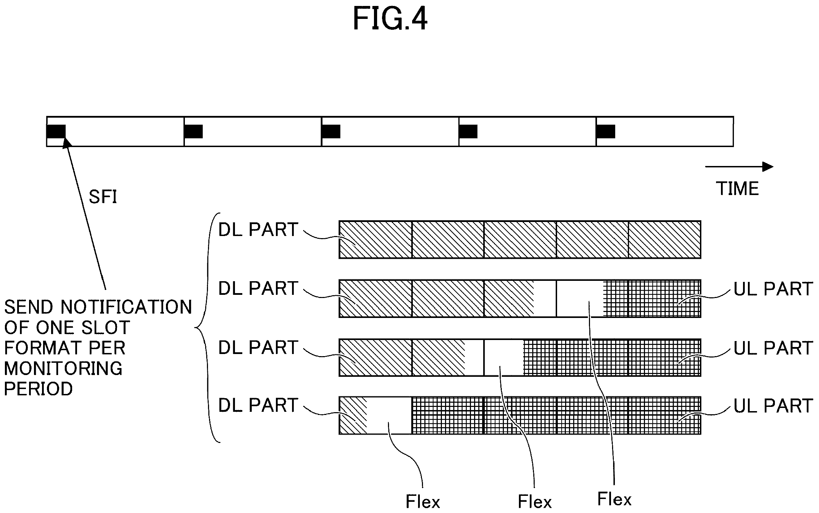

FIG. 4 is a diagram for illustrating an example of a radio frame configuration of dynamic signaling. The TDD configuration with the NR radio frame configuration illustrated in FIG. 4 is signaled to the user equipment 20, for example, by dynamic signaling via Downlink Control Information (DCI). Higher layer signaling configures 2ⁿ slot formats among multiple slot formats. Slot formats may be selected from among 56 slot formats, for example. The n corresponds to the number of bits in Slot Format Indicator (SFI) included in the DCI. As illustrated in FIG. 4, one slot format is dynamically signaled per monitoring period by the SFI. As illustrated in FIG. 4, a slot format is formed of resources in which DL, Flex, or UL is allocated. The "Flex" indicates a resource that can be used as DL or UL. The period of the TDD configuration is, for example, 1, 2, 4, 5, 8, 10, 16 or 20 slots.

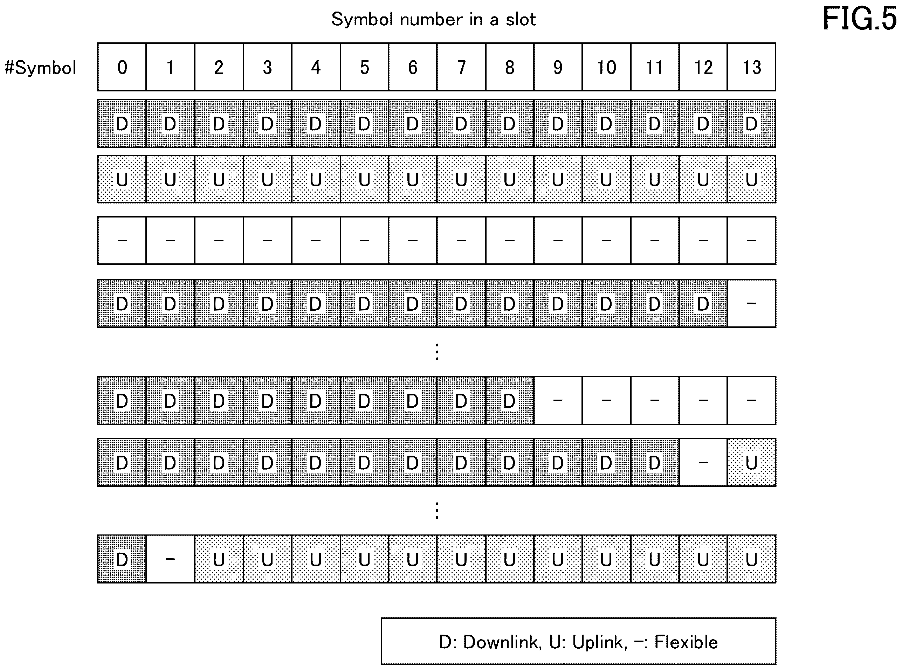

FIG. 5 is a diagram for illustrating an example (2) of a TDD UL/DL configuration. As illustrated in FIG. 5, an NR dynamic TDD UL/DL configuration can be scheduled in units of symbols. In one slot, DL, UL, or Flexible is specified on a per symbol basis. Flexible is a DL symbol or a UL symbol. For example, as illustrated in FIG. 5, all symbols in a slot may be DL, all symbols in a slot may be UL, or all symbols in a slot may be Flexible. Additionally, as illustrated in FIG. 5, a DL symbol and a Flexible symbol may be included in one slot, or a DL symbol, a Flexible symbol, and a UL symbol may be included in one slot.

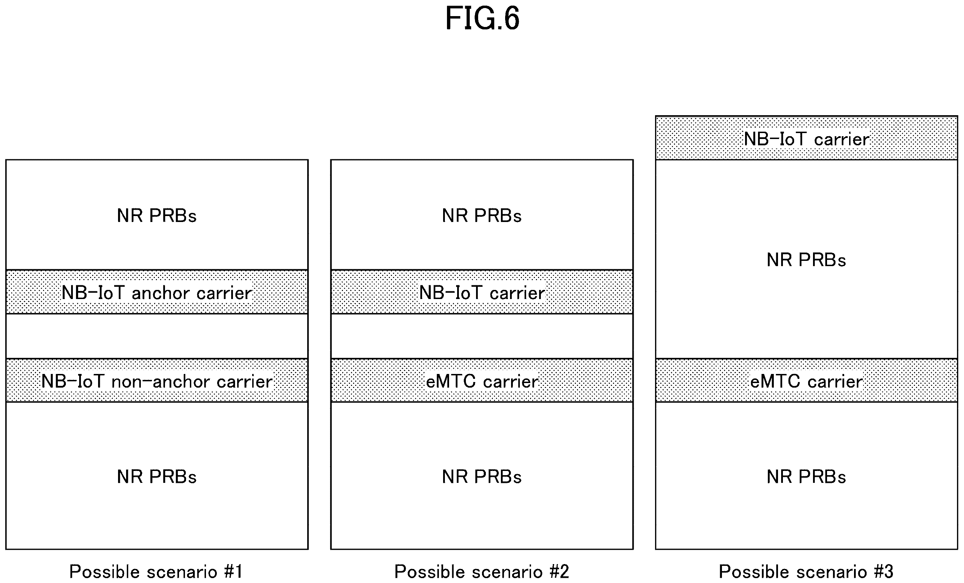

FIG. 6 is a diagram illustrating an example of an allocation of an eMTC carrier or an NB-IOT carrier. As illustrated in FIG. 6, a scenario is assumed in which the eMTC carrier or NB-IoT carrier and the NR carrier are allocated. On the NR carrier the Physical Resource Block (PRB) is allocated. In a scenario #1 illustrated in FIG. 6, the NB-IoT carriers including an anchor and non-anchor carrier are allocated to be adjacent to the NR carriers. In a scenario #2 illustrated in FIG. 6, the eMTC carrier is allocated to be adjacent to the NR carrier, and the NB-IoT carrier is allocated to be adjacent to the NR carrier. In a scenario #2 illustrated in FIG. 6, the eMTC carrier is allocated to be adjacent to the NR carrier, and the NB-IoT carrier allocated in a guard band is allocated to be adjacent to the NR carrier. As in these scenarios, a carrier used for eMTC or NB-IoT is assumed to coexist to be adjacent to a carrier used for NR.

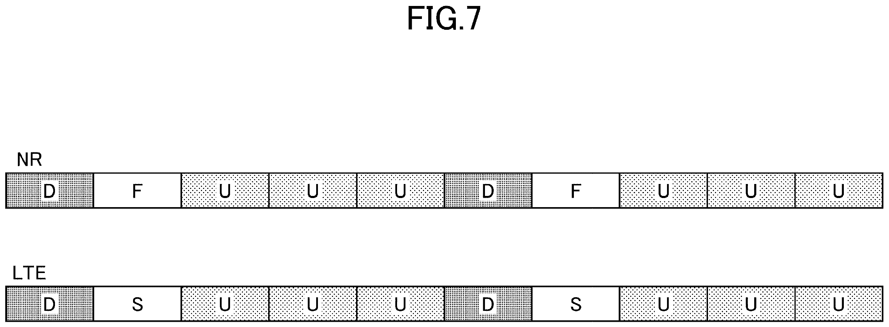

FIG. 7 is a diagram illustrating an example (1) of a TDD UL/DL allocation pattern. From the viewpoint of a network operator, it is considered that NR has the same UL or DL allocation pattern in the time domain as that of LTE. FIG. 7 is an example in which the UL or DL allocation patterns are the same for LTE-IoT and NR. As illustrated in FIG. 7, DL is allocated in a slot #0 and a slot #5 of NR and DL is allocated in a subframe #0 and a subframe #5 of LTE. UL is allocated in a slot #2, a slot #3, a slot #4, a slot #7, a slot #8, and a slot #9 of NR, and UL is allocated in a subframe #2, a subframe #3, a subframe #4, a subframe #7, a subframe #8, and a subframe #9 of LTE. Thus, the UL or DL allocation patterns are the same in the time domain for NR and LTE.

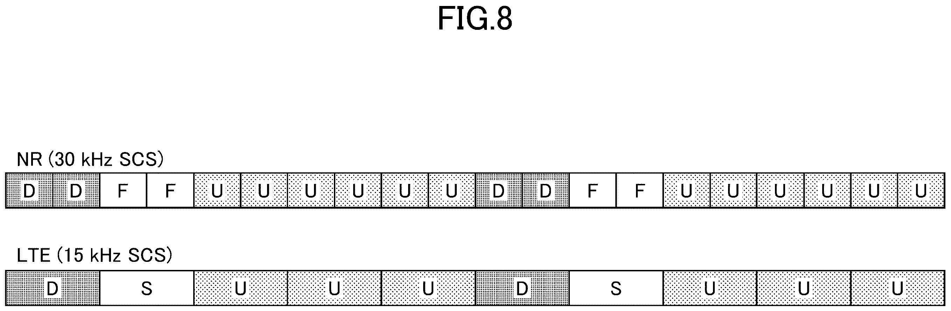

FIG. 8 is a diagram illustrating an example (2) of a TDD UL/DL allocation pattern. FIG. 8 is an example in which NR and LTE have different subcarrier spacing (SCS) and the UL or DL allocation patterns are the same for LTE-IoT and NR. As illustrated in FIG. 8, DL is allocated in a slot #0, a slot #1, a slot #10 and a slot #11 of NR, and DL is allocated in a subframe #0 and a subframe #5 of LTE. UL is allocated in slots #4 to #9 and slots #14 to #19 of NR, and UL is allocated in a subframe #2, a subframe #3, a subframe #4, a subframe #7, a subframe #8 and a subframe #9 of LTE. Thus, the UL or DL allocation patterns are the same in the time domain for NR and LTE.

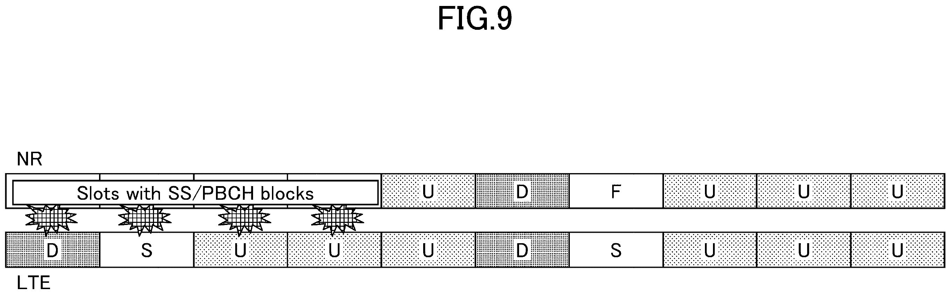

FIG. 9 is a diagram illustrating an example (3) of a TDD UL/DL allocation pattern. With reference to FIG. 9, a case is described in which it is difficult to have the same UL or DL allocation patterns for NR and LTE. When the network operator operates LTE-TDD with a configuration in which a large number of ULs are allocated, an NR SS/PBCH block may collide with an LTE UL subframe.

As illustrated in FIG. 9, the SS/PBCH blocks allocated in slots #0 to #3 of NR overlap with subframes #0 to #3 of LTE in the time domain. As ULs of LTE are allocated in a subframe #2 and a subframe #3, the SS/PBCH block of NR collides with the UL of LTE.

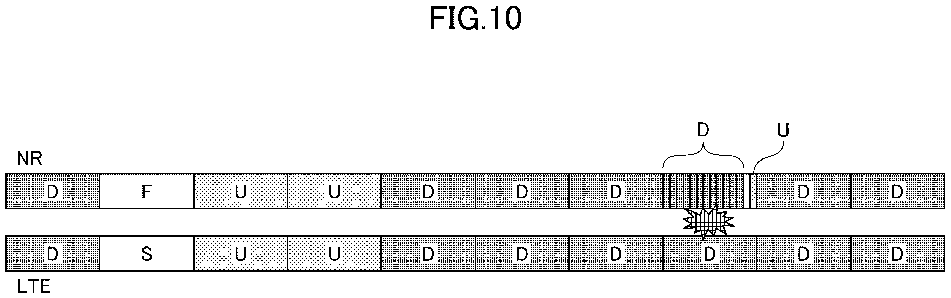

FIG. 10 is a diagram illustrating an example (4) of a TDD UL/DL allocation pattern. With reference to FIG. 10, a case is described in which it is difficult to have the same UL or DL allocation patterns due to scheduling in NR on a per symbol basis. When scheduling in units of symbols is performed in an NR slot #7 and the slot includes a UL symbol, UL of NR collides with DL of LTE because a subframe #7 of LTE is DL.

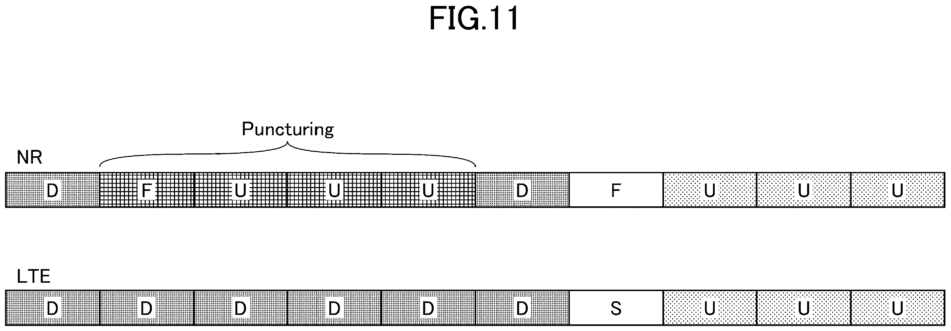

FIG. 11 is a diagram illustrating an example (1) of a TDD UL/DL allocation pattern according to an embodiment of the present invention. A problem that the UL/DL allocation pattern of NR becomes different from the UL/DL allocation pattern of LTE in the time domain can be solved by puncturing a signal or a channel, or by excluding a signal or a channel to perform rate matching. In NR, the UL/DL allocation pattern may be reconfigured by a dynamic UL/DL configuration. In the following, the term "puncturing" may be replaced with "excluding to perform rate matching" or "excluded to perform rate matching."

As illustrated in FIG. 11, an NR signal or an NR channel may be punctured. FIG. 11 is an example in which slots #1 to #4 of NR to which Flexible or UL is allocated, are punctured. Puncturing avoids overlap of UL and DL of NR or LTE in the time domain.

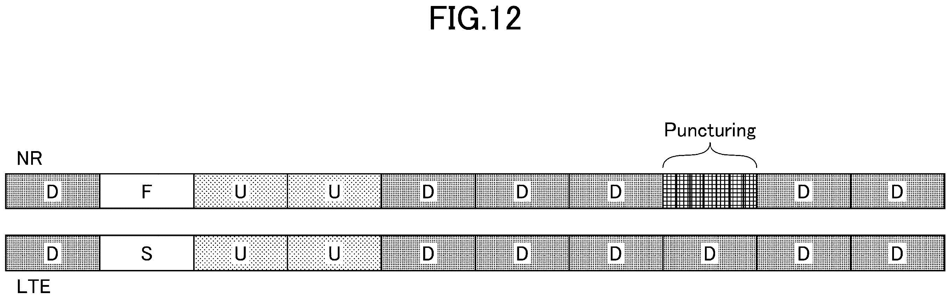

FIG. 12 is a diagram illustrating an example (2) of a TDD UL/DL allocation pattern according to an embodiment of the present invention. As illustrated in FIG. 12, an NR signal or an NR channel may be punctured. FIG. 12 is an example in which slot #7 of NR, in which scheduling on a per symbol basis is performed, is punctured. Puncturing avoids overlap of UL and DL of NR or LTE in the time domain.

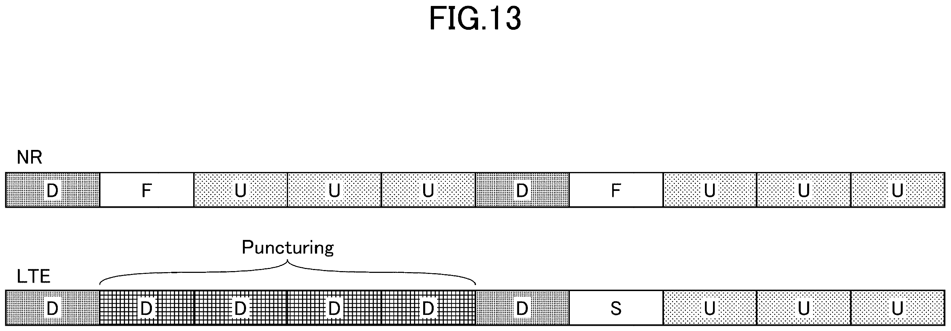

FIG. 13 is a diagram illustrating an example (3) of a TDD UL/DL allocation pattern according to an embodiment of the present invention. As illustrated in FIG. 13, an LTE signal or an LTE channel may be punctured. FIG. 13 is an example in which DL LTE slots #1 to #4 are punctured. Puncturing avoids overlap of UL and DL of NR or LTE in the time domain.

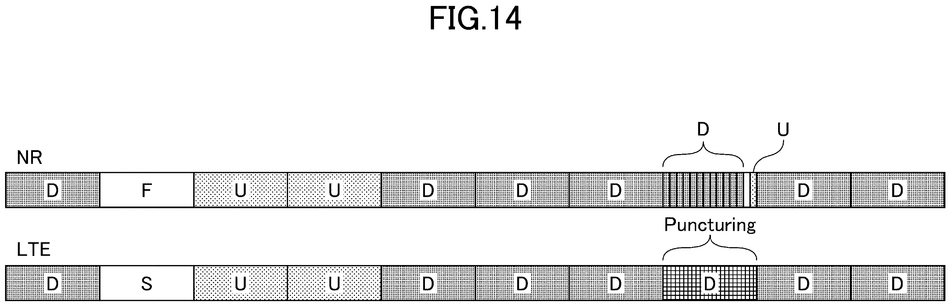

FIG. 14 is a diagram illustrating an example (4) of a TDD UL/DL allocation pattern according to an embodiment of the present invention. As illustrated in FIG. 14, an LTE signal or an LTE channel may be punctured. FIG. 14 is an example in which a subframe #7 of LTE corresponding to a slot #7 of NR, in which scheduling on a per symbol basis is performed, is punctured. Puncturing avoids overlap of UL and DL of NR or LTE in the time domain.

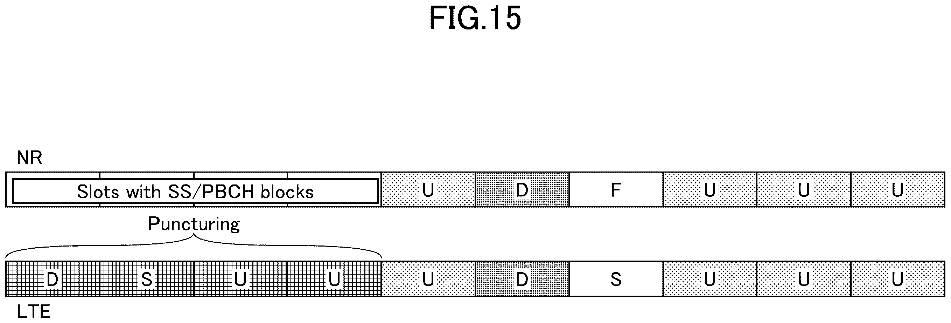

FIG. 15 is a diagram illustrating an example (5) of a TDD UL/DL allocation pattern according to an embodiment of the present invention. In order to solve the problem where the UL/DL allocation pattern of NR becomes different from the UL/DL allocation pattern of LTE in the time domain, signaling may be introduced to provide a notification of a UL/DL resource allocation pattern of NR to an LTE-IoT device. Based on such signaling, puncturing or excluding to perform rate matching of an LTE signal or an LTE channel illustrated in FIG. 13 and FIG. 14 may be performed. Hereinafter, the term "puncturing" may be replaced by "excluding to perform rate matching" or "excluded to perform rate matching".

The signaling for providing a notification of an NR UL/DL resource allocation pattern may include the following items of information 1) to 5):
1) Information indicating a slot number of the reserved UL/DL or a symbol number of the reserved UL/DL, and a position in the time domain such as a period;
2) System Frame Number (SFN) in which the reserved UL or DL is allocated;
3) Information indicating the number, a period, or a time domain position of SS/PBCH blocks;
4) Information indicating the SCS of the SS; and
5) Information indicating the SCS of the data.

FIG. 15 is an example in which subframes #0 to #3 of LTE are punctured based on information indicating the time domain position of the SS/PBCH block, by the signaling of providing a notification of the above-mentioned UL/DL resource allocation pattern of NR. Puncturing avoids overlap of UL and DL of NR or LTE in the time domain. When the SS/PBCH block overlaps with a subframe of LTE in the time domain, all overlapping subframes of LTE may be punctured, regardless of whether the subframe of LTE is UL or DL.

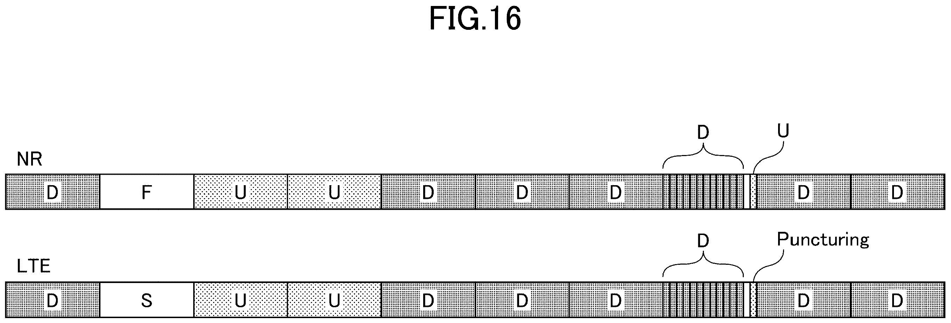

FIG. 16 is a diagram illustrating an example (6) of a TDD UL/DL allocation pattern according to an embodiment of the present invention. FIG. 16 is an example in which the time domain position of a UL symbol of NR is determined by the signaling for providing a notification of the above-described UL/DL resource allocation pattern of NR, and a DL symbol overlapping with the UL symbol of NR in a subframe #7 of LTE is punctured or excluded to perform rate matching. The puncturing or the rate matching avoids overlap of UL and DL of NR or LTE in the time domain. Here, in the PDSCH of LTE, the rate matching may be performed on DL symbols obtained by excluding a DL symbol colliding with the UL symbol of NR.

As another method to solve the problem where the UL/DL allocation pattern of NR becomes different from the UL/DL allocation pattern of LTE in the time domain, for example, flag information may be specified indicating whether a UE conforming to release 16 or later can camp on to a predetermined cell, separately from a legacy UE.
For example, the legacy UE may be prevented from camping on the same cell as the NR UE by configuring, by using the flag information, a cell onto which only NB-IoT devices classified as the legacy UE can camp on.

Additionally, as another method to solve the problem where the UL/DL allocation pattern of NR becomes different from the UL/DL allocation pattern of LTE in the time domain, signaling in an opposite direction with the same information as the signaling described in FIG. 15 may be introduced. That is, signaling may be introduced to provide a notification of the LTE UL/DL allocation pattern to the NR device. Based on such signaling, the rate matching illustrated in FIG. 11 and FIG. 12 may be executed by puncturing or excluding the NR signal or the NR channel.

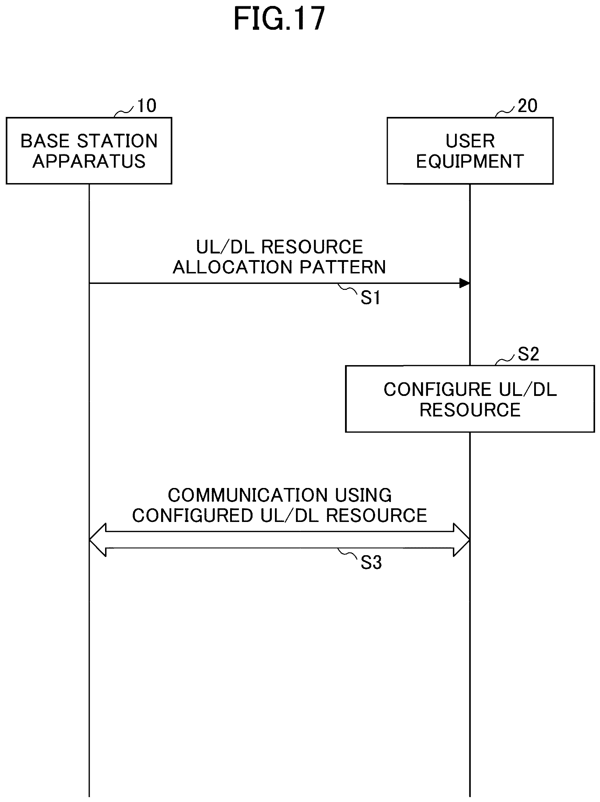

FIG. 17 is a sequence diagram for illustrating an operation of the UL/DL resource allocation according to an embodiment of the present invention.

In step S1, the base station apparatus 10 transmits the UL/DL resource allocation pattern to the user equipment 20. Additionally, signaling for providing, from the base station apparatus 10 to the user equipment 20, a notification of the UL/DL resource allocation pattern of NR for the LTE-IoT device described above may be transmitted. Signaling for providing, from the base station apparatus 10 to the user equipment 20, a notification of the LTE UL/DL resource allocation pattern for the NR device described above may also be transmitted.

Next, in step S2, the user equipment 20 configures UL/DL resources in the radio frame based on the UL/DL resource allocation pattern received in step S1. Additionally, based on the signaling for providing the notification of the NR UL/DL resource allocation pattern for the LTE-IoT device described above, the user equipment 20 may perform puncturing or excluding to perform rate matching of the LTE signal or the LTE channel as described in FIG. 13, FIG. 14, FIG. 15, or FIG. 16. Additionally, based on the signaling for providing the notification of the LTE UL/DL resource allocation pattern for the NR device described above, the user equipment 20 may perform puncturing or excluding to perform rate matching of the NR signal or the NR channel as described in FIG. 11 or FIG. 12.

Next, in step S3, the base station apparatus 10 and the user equipment 20 communicate by using the configured UL/DL resources.

According to the embodiments described above, the user equipment 20 can enhance resource usage efficiency by obtaining information indicating the UL/DL allocation pattern of a radio access technology (RAT) different from the RAT of the user equipment 20, and by puncturing or excluding to perform rate matching of a signal of the user equipment 20 that may be interfered or may cause interference, when the UL/DL allocation pattern of NR becomes different from the UL/DL allocation pattern of LTE in the time domain. The RAT is a radio access technology that defines a physical connection method in a radio communication network, such as NR, LTE, LTE-Advanced (LTE-A), NB-IoT, SUPER 3G, IMT-Advanced, 4th generation mobile communication system (4G), 5th generation mobile communication system (5G), Future Radio Access (FRA), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), or Bluetooth(registered trademark). A radio access technology in the embodiments of the present invention may be defined by a difference of radio systems that define partially different physical connections on the same RAT, such as LTE and eMTC. That is, for example, LTE, eMTC, and NB-IoT may be classified as different radio access technologies.

Namely, appropriate scheduling can be performed for radio communications to which different time division multiplexing configurations are applied.

### (Device Configurations)

Next, examples of functional configurations of the base station apparatus 10 and the user equipment 20 for executing the above-described processing and operation are described. The base station apparatus 10 and the user equipment 20 include functions for executing the above-described embodiments. However, each of the base station apparatus 10 and the user equipment 20 may be provided with only a part of the functions in the embodiments.

### <Base station apparatus 10>

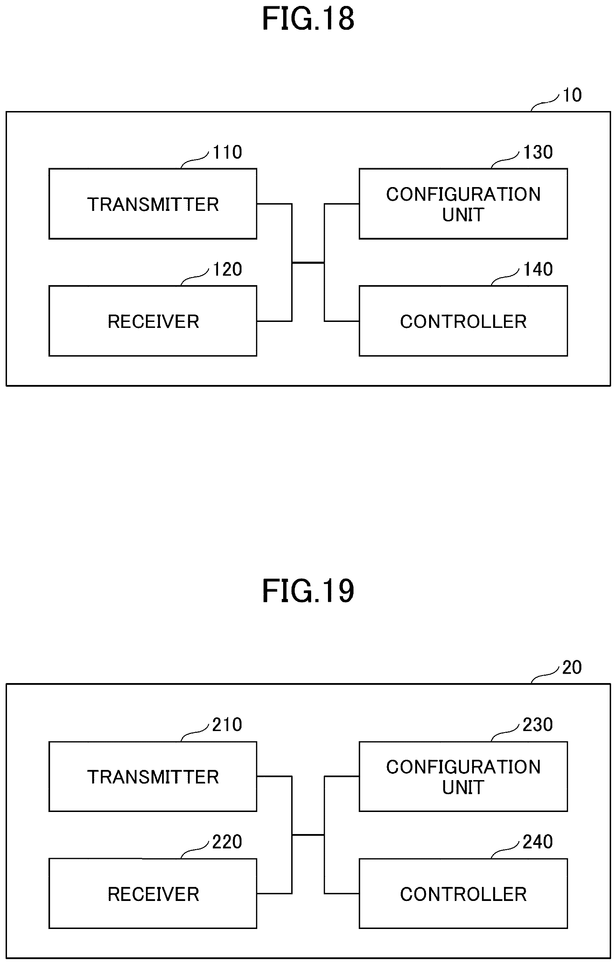

Fig. 18 is a diagram illustrating an example of a functional configuration of the base station apparatus 10. As illustrated in Fig. 18, the base station apparatus 10 includes a transmitter 110; a receiver 120; a configuration unit 130; and a controller 140. The functional configuration illustrated in Fig. 18 is merely an example. Functional division and names of functional units may be any division and names, provided that operation according to the embodiments of the present invention can be executed.

The transmitter 110 includes a function for generating a signal to be transmitted to the user equipment 20 and transmitting the signal through radio. The receiver 120 includes a function for receiving various signals transmitted from the user equipment 20 and retrieving, for example, information of a higher layer from the received signals. The transmitter 110 has a function to transmit NR-PSS, NR-SSS, NR-PBCH, DL/UL control signals, and the like, to the user equipment 20.

The configuration unit 130 stores preconfigured configuration information and various types of configuration information to be transmitted to the user equipment 20 in a storage device and reads the configuration information from the storage device if necessary. For example, content of the configuration information is, for example, a configuration of a TDD UL/DL configuration or the like.

As described in the embodiments, the controller 140 performs a process related to a TDD UL/DL configuration, and controls communication to which the TDD UL/DL configuration is applied. A functional unit related to signal transmission in the controller 140 may be included in the transmitter 110, and a functional unit related to signal reception in the controller 140 may be included in the receiver 120.

### <User equipment 20>

Fig. 19 is a diagram illustrating an example of a functional configuration of the user equipment 20. As illustrated in Fig. 19, the user equipment 20 has a transmitter 210, a receiver 220, a configuration unit 230, and a controller 240. The functional configuration illustrated in Fig. 19 is merely an example. Functional division and names of functional units may be anything, provided that operation according to the embodiments of the present invention can be executed.

The transmitter 210 generates a transmission signal from transmission data and transmits the transmission signal through radio.
The receiver 220 receives various types of signals through radio, and retrieves a signal of a higher layer from a received signal of a physical layer.
The receiver 220 also has a function of receiving the NR-PSS, the NR-SSS, the NR-PBCH, the DL/UL/SL control signals, or the like transmitted from the base station apparatus 10. Furthermore, for example, the transmitter 210 may transmit a physical sidelink control channel (PSCCH), a physical sidelink shared channel (PSSCH), a physical sidelink discovery channel (PSDCH), a physical sidelink broadcast channel (PSBCH), and the like to another user equipment 20 as the D2D communication, and the receiver 120 receives the PSCCH, the PSSCH, the PSDCH, the PSBCH, and the like from another user equipment 20.

The configuration unit 230 stores various types of configuration information received from the base station apparatus 10 or the user equipment 20 through the receiver 220 in the storage device and reads the configuration information from the storage device if necessary. The configuration unit 230 also stores pre-configured configuration information. For example, content of the configuration information is a configuration for a TDD UL/DL configuration or the like.

As described in the embodiments, the controller 240 controls, based on information related to a TDD UL/DL configuration obtained from the base station apparatus 10, communication to which the TDD UL/DL configuration is applied. A functional unit related to signal transmission in the controller 240 may be included in the transmitter 210, and a functional unit related to signal reception in the controller 240 may be included in the receiver 220.

### <Hardware configuration>

The block diagrams (FIG. 18 and FIG. 19) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

For example, the base station apparatus 10, the user equipment 20, or the like in an embodiment of the present invention may function as a computer for performing a process of radio communication method according to the present disclosure. Fig. 12 is a diagram illustrating an example of a hardware configuration of the base station apparatus 10 and the user equipment 20 according to an embodiment of the present disclosure. Each of the base station apparatus 10 and the user equipment 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, device, unit, or the like. The hardware configuration of each of the base station apparatus 10 and the user equipment 20 may be configured to include each device depicted, or may be configured without including some devices.

Each function in each of the base station apparatus 10 and the user equipment 20 is implemented such that predetermined software (program) is read on hardware such as the processor 1001, the storage device 1002 and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the above-described controller 140, the controller 240, and the like may be implemented by the processor 1001.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiments is used as the program. For example, the controller 140 of the base station apparatus 10 illustrated in FIG. 18 may be implemented by a control program which is stored in the storage device 1002 and operates on the processor 1001. Furthermore, for example, the controller 240 of the user equipment 20 illustrated in Fig. 19 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like.
The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as a "network device," a "network controller," a "network card," a "communication module," or the like. The communication device 1004 may be configured to include a high frequency switch, a duplexer, a filter, a frequency synthesizer, and the like to implement at least one of frequency division duplex (FDD) and time division duplex(TDD). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the storage device 1002 are connected by the bus 1007 to communicate information with each other. The bus 1007 may be configured with a single bus or may be configured with different buses between the devices.

Furthermore, each of the base station apparatus 10 and the user equipment 20 may be configured to include hardware such as a microprocessor, a digital signal processor (DSP), an application specific integrated circuit (ASIC), a programmable logic device (PLD), or a field programmable gate array (FPGA), or all or some of the functional blocks may be implemented by hardware. For example, the processor 1001 may be implemented by at least one of these pieces of hardware.

### (Conclusion of the embodiments)

As described above, according to the embodiments of the present invention, there is provided a user equipment including a receiving unit that receives, from a base station apparatus, a resource configuration used for uplink and downlink in time division duplex and information indicating an allocation pattern of a resource used for uplink and downlink in time division duplex in a radio access technology that differs from a radio access technology of the user equipment; a control unit that determines, based on the resource configuration of and the information indicating the allocation pattern, a resource used for the uplink and the downlink in the time division duplex used by the user equipment; and a communication unit that performs communication with the base station apparatus on the determined resource used for the uplink and the downlink in the time division duplex.

With the above configuration, the user equipment 20 can enhance resource usage efficiency by obtaining information indicating the UL/DL allocation pattern of a radio access technology (RAT) different from the RAT of the user equipment 20, and by puncturing a signal of the user equipment 20 that may be interfered or that may cause interference, when the UL/DL allocation pattern of NR becomes different from the UL/DL allocation pattern of LTE in the time domain. That is, appropriate scheduling can be performed for radio communications to which different time division multiplexing configurations are applied.

The control unit may perform rate matching by puncturing or excluding a part of the resource configuration based on the information indicating the allocation pattern. This enables the user equipment 20 to enhance resource usage efficiency by obtaining information indicating the UL/DL allocation pattern of the RAT different from the RAT of the user equipment 20, and by performing rate matching by puncturing or excluding a signal of the user equipment 20 that may be interfered or that may cause interference, when the UL/DL allocation pattern of NR becomes different from the UL/DL allocation pattern of LTE in the time domain.

When a time domain position of an uplink signal in the resource configuration overlaps with a time domain position of a downlink signal in the information indicating the allocation pattern, the control unit may perform rate matching by puncturing or excluding the overlapped uplink signal in the resource configuration, and, when a time domain position of a downlink signal in the resource configuration overlaps with a time domain position of an uplink signal in the information indicating the allocation pattern, the control unit may perform rate matching by puncturing or excluding the overlapped downlink signal in the resource configuration. This configuration enables the user equipment 20 to enhance resource usage efficiency by obtaining information indicating the UL/DL allocation pattern of a RAT different from the RAT of the user equipment 20, and by performing rate matching by puncturing or excluding a signal of the user equipment 20 that may be interfered or that may cause interference, when the UL/DL allocation pattern of NR becomes different from the UL/DL allocation pattern of LTE in the time domain.

The control unit may perform rate matching by puncturing or excluding all signals in the resource configuration that overlap with a time domain position of a synchronization signal and physical broadcast channel block in the information indicating the allocation pattern. This enables the user equipment 20 to enhance resource usage efficiency by obtaining information indicating the UL/DL allocation pattern of a RAT different from the RAT of the user equipment 20, and by performing rate matching by puncturing or excluding a signal of the user equipment 20 that may be interfered or that may cause interference, when the UL/DL allocation pattern of NR becomes different from the UL/DL allocation pattern of LTE in the time domain.

When an uplink signal allocated on a per symbol basis in the information indicating the allocation pattern overlaps with a downlink symbol of a signal in the resource configuration, the control unit may perform rate matching by using one or more downlink symbols obtained by excluding the overlapped downlink symbol in the resource configuration. This enables the user equipment 20 to communicate with maintaining an appropriate error rate by obtaining information indicating the UL/DL allocation pattern of a RAT different from the RAT of the user equipment 20, and by performing rate matching of a DL resource obtained after puncturing a signal of the user equipment 20 that may be interfered or that may cause interference, when the UL/DL allocation pattern of NR becomes different from the UL/DL allocation pattern of LTE in the time domain.

Furthermore, according to the embodiments of the present invention, there is provided a base station apparatus including a transmitting unit that transmits, to a user equipment, a resource configuration used for uplink and downlink in time division duplex and information indicating an allocation pattern of a resource used for uplink and downlink in time division duplex in a radio access technology that differs from a radio access technology of the user equipment; a control unit that determines, based on the resource configuration and the information indicating the allocation pattern, a resource used for the uplink and the downlink in the time division duplex used by the user equipment; and a communication unit that performs communication with the user equipment on the determined resource used for the uplink and the downlink in the time division duplex.

With the above configuration, the user equipment 20 can enhance resource usage efficiency by obtaining information indicating the UL/DL allocation pattern of a radio access technology (RAT) different from the RAT of the user equipment 20, and by performing rate matching by puncturing or excluding a signal of the user equipment 20 that may be interfered or that may cause interference, when the UL/DL allocation pattern of NR becomes different from the UL/DL allocation pattern of LTE in the time domain. That is, appropriate scheduling can be performed for radio communications to which different time division multiplexing configurations are applied.

### (Supplemental embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent).

The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station apparatus 10 and the user equipment 20 are described using the functional block diagrams, but such devices may be implemented by hardware, software, or a combination thereof. Software executed by the processor included in the base station apparatus 10 according to the embodiment of the present invention and software executed by the processor included in the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by any other method. For example, the notification of information may be given by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), NR (new Radio), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The processing procedures, the sequences, the flowcharts, and the like of the respective aspects/embodiments described in this specification may be rearranged in order provided that there is no contradiction. For example, the method described in the present disclosure presents elements of various steps with an exemplary order and is not limited to a presented specific order.

In this specification, a specific operation to be performed by the base station apparatus 10 may be performed by an upper node in some cases. In the network including one or more network nodes including the base station apparatus 10, various operations performed for communication with the user equipment 20 can be obviously performed by at least one of the base station apparatus 10 and any network node (for example, an MME, an S-GW, or the like is considered, but it is not limited thereto) other than the base station apparatus 10. A case is exemplified above in which there is one network node other than the base station apparatus 10. The one network node may be a combination of a plurality of other network nodes (e.g., MME and S-GW).

Information, a signal, or the like described in the present disclosure may be output from a higher layer (or a lower layer) to a lower layer (or a higher layer layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted.
Input information and the like may be transmitted to another device.

The determination in the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in the present disclosure may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or any combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names assigned to the various channels and the information elements are not limited in any respect.

In the present disclosure, the terms "base station (BS)," "radio base station," "base station apparatus," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the user terminal is replaced with communication between a plurality of units of user equipment 20 (for example, which may be referred to as device-to-device (D2D) or vehicle-to-everything (V2X)). In this case, the user equipment 20 may have the functions of the base station apparatus 10 described above. Further, the terms "uplink" and "downlink" may be replaced with terms (for example, "side") corresponding to inter-terminal communication. For example, an uplink channel, a downlink channel, or the like may be replaced with side channels.

Similarly, the user terminal in the present disclosure may be replaced with the base station. In this case, the base station may have the functions of the above-mentioned user terminal.

The terms "determine (determining)" and "decide (determining)" used in this disclosure may include various types of operations. For example, "determining" and "deciding" may include deeming that a result of judging, calculating, computing, processing, deriving, investigating, looking up (search, inquiry) (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided. "Determine (decision)" may be replaced with "assuming," "expecting" "considering," and so forth.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Further, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Further, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each user equipment 20) to each user equipment 20 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is provided, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Further, a long TTI (for example, a normal TTI, a subframe, or the like) may be replaced with a TTI having a time length exceeding 1 ms, and a short TTI (for example, a reduced TTI or the like) may be replaced with a TTI having a TTI length that is less than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Further, a time domain of an RB may include one or more symbols and may be a length of one slot, one mini slot, one subframe, or one TTI. One TTI, one subframe, or the like may be formed of one or more resource blocks.

Further, one or more RBs may be referred to as a physical resource block (PRB), a sub carrier group (SCG), a resource element group (REG), a PRB pair, an RB pair, or the like.

Further, the resource block may be formed of one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Further, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Further, the term may mean "each of A and B is different from C." Terms such as "separated," "coupled," or the like may also be interpreted similarly to "different."

Each aspect/embodiment described in the present disclosure may be used alone, in combination, or may be switched in accordance with the execution. Further, notification of predetermined information (for example, notification of "being X") is not limited to being performed explicitly, but may be performed by implicitly (for example, not notifying the predetermined information).

In the present disclosure, the transmitter 210 and the receiver 220 are an example of a communication unit. The transmitter 110 and the receiver 120 are an example of a communication unit. The TDD UL/DL configuration is an example of a resource configuration used for uplink and downlink in time division duple duplex. The RAT is an example of a radio access technology. The SS/PBCH block is an example of a synchronization signal and physical broadcast channel block.

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

### LIST OF REFERENCE SYMBOLS

- 10: base station apparatus
- 110: transmitter
- 120: receiver
- 130: configuration unit
- 140: controller
- 20: user equipment
- 210: transmitter
- 220: receiver
- 230: configuration unit
- 240: controller
- 1001: processor
- 1002: storage device
- 1003: auxiliary storage device
- 1004: communication device
- 1005: input device
- 1006: output device

## Claims

1. A user equipment comprising:
a receiving unit that receives, from a base station apparatus, a resource configuration used for uplink and downlink in time division duplex and information indicating an allocation pattern of a resource used for uplink and downlink in time division duplex in a radio access technology that differs from a radio access technology of the user equipment;
a control unit that determines, based on the resource configuration and the information indicating the allocation pattern, a resource used for the uplink and the downlink in the time division duplex used by the user equipment; and
a communication unit that performs communication with the base station apparatus on the determined resource used for the uplink and the downlink in the time division duplex.

2. The user equipment according to claim 1, wherein the control unit performs rate matching by puncturing or excluding a part of the resource configuration based on the information indicating the allocation pattern.

3. The user equipment according to claim 2, wherein, when a time domain position of an uplink signal in the resource configuration overlaps with a time domain position of a downlink signal in the information indicating the allocation pattern, the control unit performs rate matching by puncturing or excluding the overlapped uplink signal in the resource configuration, and
wherein, when a time domain position of a downlink signal in the resource configuration overlaps with a time domain position of an uplink signal in the information indicating the allocation pattern, the control unit performs rate matching by puncturing or excluding the overlapped downlink signal in the resource configuration.

4. The user equipment according to claim 2, wherein the control unit performs rate matching by puncturing or excluding all signals in the resource configuration that overlap with a time domain position of a synchronization signal and physical broadcast channel block in the information indicating the allocation pattern.

5. The user equipment according to claim 2, wherein, when an uplink signal allocated on a per symbol basis in the information indicating the allocation pattern overlaps with a downlink symbol of a signal in the resource configuration, the control unit performs rate matching by using one or more downlink symbols obtained by excluding the overlapped downlink symbol in the resource configuration.

6. A base station apparatus comprising:
a transmitting unit that transmits, to a user equipment, a resource configuration used for uplink and downlink in time division duplex and information indicating an allocation pattern of a resource used for uplink and downlink in time division duplex in a radio access technology that differs from a radio access technology of the user equipment;
a control unit that determines, based on the resource configuration and the information indicating the allocation pattern, a resource used for the uplink and the downlink in the time division duplex used by the user equipment; and
a communication unit that performs communication with the user equipment on the determined resource used for the uplink and the downlink in the time division duplex.
